# EUROPEAN PATENT APPLICATION

(11) **EP 1 052 643 A2**
(43) Date of publication of application: **15.11.2000**
(21) Application number: 00304007.8
(22) Date of filing: 12.05.2000
(51) Int. Cl.: G11B 23/40

(54) **Label-integrated index card**

(30) Priority: 13.05.1999 JP 13255099; 22.02.2000 JP 2000044195
(71) Applicant: TDK Corporation, Chuo-ku, Tokyo 103-8272 (JP)
(72) Inventor: Nakajima, Hiroyuki, c/o TDK Corporation, Tokyo 103-8272 (JP)
(74) Representative: Rees, David Christopher

(57) **Abstract**

There is provided a label-integrated index card contained in an open-close type hexahedron container case comprising a main body having a bottom wall and a cover having a top wall, a front surface of said container case having an opening for cartridge insertion, said label-integrated index being composed of an index card having one surface processed with release treatment and a label having one surface processed with adhesive treatment and said label being attached to the index card at said one surfaces of said label and the index card, and said label-integrated index card including a rear portion abutting a rear wall of the case, a main portion connecting to the rear portion via a bend line, and a fold-back portion connecting to the main portion via a bend line, characterized in that areas on the side of the label adjacent to the bend line between the main portion and the fold-back portion is removed and/or cutoff edges are provided at both ends of the bend line between the main portion and the fold-back portion.

## Description

The present invention relates to an index card integrated with a label, which is to be contained in a container case for a cartridge containing a recording medium therein.

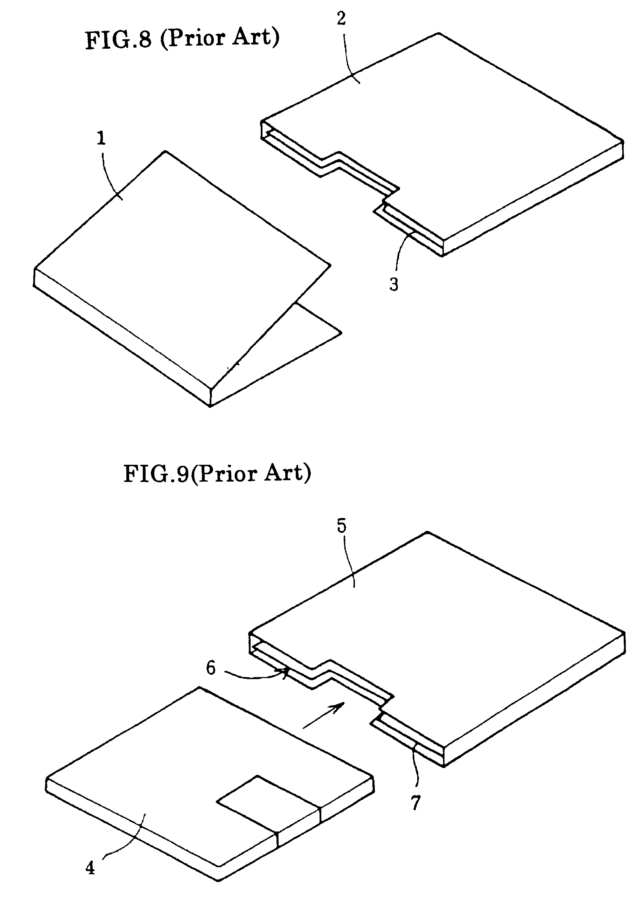

Conventionally, a label and an index card accompanied with a cartridge containing or enclosing a recording medium, especially a mini-disc (hereinbelow, simply referred to as "MD"), are separately contained in a package. For example, as shown in Fig. 8, an index card 3 is contained, together with a MD cartridge (not shown), in a sleeve-type container case 2, and a label 1 is packed separately in a manner that it wraps the case 2. However, when the label 1 and the index card 3 are separately packed in this manner, the label 1 is likely to be lost. In addition, there arises a problem that a release or peel sheet on which the label is supported may become a trash and eventually it may cause an environmental problem. In order to solve the problem, Japanese Utility Model Kokai No. 57-198789 proposes an index card integrated with a label (hereinbelow, simply referred to as "label-integrated index card"), which is prepared by effecting release treatment of one surface of the index card thereby obtaining a release surface and by attaching a label, which had been processed with adhesive treatment, to the release surface.

Japanese Patent Application Kokai No.8-324669 discloses a label-integrated index card wherein the materials for the label and the index card are limited in order to maintain aptitude for wrapping, to prevent wrapping film from tearing caused by, for example, drop impact, and to provide writable surface. The publication proposes that the card is folded so that the cross-section becomes a cornered U shape, the case is sandwiched by the card folded into 'U' shape; and the case and card be wrapped together with a film. In order to overcome the inconvenience in insertion of the index card into the conventional sleeve-type container case for MD cartridge, and to prevent the card from missing, Japanese Patent Application Kokai No. 10-59460 discloses an MD cartridge container case which does not have opening for the index card on its front surface, and instead comprises a main body having a bottom wall and a cover or lid having a top wall in such manner that the cover is openable with respect to the main body. Thus, the MD cartridge and the index card can be enclosed after opening the lid. The case is provided with a step on the bottom wall of the main body, which locates the index card to the determined position, and the index card is fixed in position by pinching it between the main body and the cover by closing them. However, the index card disclosed is not a label-integrated one but an ordinary index card.

Further, the label-integrated index card disclosed in Japanese Utility Model Kokai No. 57-198789 is for a cassette tape container case, and no opening for the cassette tape is provided on one side of the container case.

In the case of the label-integrated index card disclosed in Japanese Patent Application Kokai No.8-324669, the label alone or the card alone may not be lost, because of the integration. However, the card is wrapped over the case and not contained in the case, and thus the label-integrated index card may be lost after the wrapping film is removed. In addition, when the case and the card are wrapped together in that manner, there raises a problem in a packed MD set (usually 3 - 5 MD cartridges each contained in a case are packed in a set), which is the most common type of the MD cartridge as a commodity at present. The reason is as follows. Since the label-integrated index card is located outside the case, when a common automatic packing machine is used to make a set, first of all the label-integrated index card should be wrapped together with the case in a film so as to be handled as a single case in the machine. Then, multiple cases each wrapped together with the card in the film can be packed together in a film to form a set. The extra film for each case may become a trash and may have an environmental problem, and from such viewpoint, the use of the extra film should be omitted.

With respect to the case comprising the main body and the cover, as is disclosed in Japanese Patent Kokai No. 10-59460, it is possible that the opening for the disc cartridge be provided at the front surface of the container case, and that the label-integrated index card be contained in the container case. However, when the label area suitable for usage is maintained in the label integrated with the index card, the resultant label-integrated index card should be relatively large. Therefore, when the card is contained in the case, the part of the card should be folded-back near the opening of the disc cartridge, and the thickness of the card is increased. As a result, when the MD cartridge 4 is inserted into the opening 6 in the direction as shown in Fig. 9, there will be a problem in that the insertion will be hindered by the thickness of label-integrated index card 7.

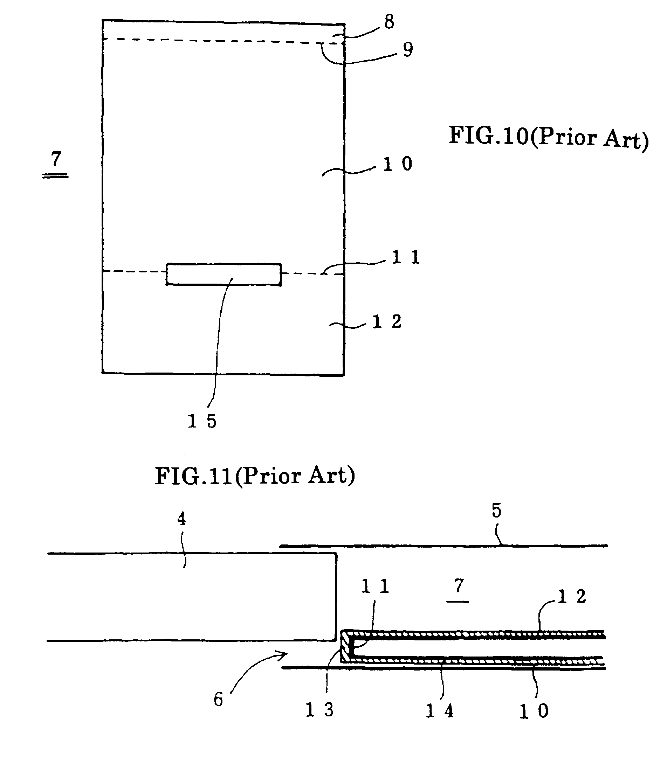

Fig. 10 shows one example of the index card 7, which comprises: a rear portion 8, a main portion 10 connecting to the rear portion 8 via a bend line 9 having perforation, and a fold-back portion 12 connecting to the main portion 10 via a bend line 11 having perforation, wherein one surface has been processed with release treatment and one surface of the label that has been processed with adhesive treatment is attached to the release surface. The label-integrated index card 7 has a thickness of 200 - 300 µm, and thus when the card is folded, the thickness becomes about 500 - 600 µm. When the MD cartridge 4 is inserted, the label-integrated index card 7 and the MD cartridge 4 will come to contact as shown in Fig. 11, resulting in the hindrance of the insertion. In the worst case, the label-integrated index card will be deformed due to the environmental conditions, and when the MD cartridge 4 is forced into the case, the label-integrated index card 7 may be squashed and spoiled. In Figs. 10-11, the number 13 indicates the index card itself of the label-integrated index card, the number 14 indicates the label attached thereto, the number 15 indicates a finger notch hole of index card 7, which is to be aligned with a finger notch of the container case 5.

The present invention has been proposed with the view to solving the above-mentioned problems, and the present invention provides an label-integrated index card which has advantages in that: the loss of the card can be prevented; the regular function of label and the index card is provided; the smooth insertion of the cartridge into the container case is provided; and the packing process of cartridge container case is simplified.

In order to attain the above-mentioned objects, the label-integrated index card of the present invention is used in association with an open-close type hexahedron container case comprising a main body having a bottom wall and a cover having a top wall, the front surface of which case has an opening for cartridge insertion. The label-integrated index card is composed of an index card having one surface processed with release treatment and a label having one surface processed with adhesive treatment and attached to the release surface of the index card. The label-integrated card comprises a rear portion abutting the rear wall of the case, a main portion connecting to the rear portion via a bend line, and a fold-back portion connecting to the main portion via another bend line, In addition, the label of the label-integrated index card is partly removed at the areas adjacent to the bend line between the main portion and the fold-back portion (i.e. the part of the main portion and the part of the fold-back portion that are adjacent to the bend line). The width of the removed area is approximately 2 - 20 mm. As the result of this removal, the thickness of the adjacent portion to the bend line when folded will be reduced.

When the label-integrated index card with the above-mentioned construction is contained in the container case, and then the MD cartridge is inserted into the case from the front opening of the closed container case, the MD cartridge can be smoothly inserted, because of the reduced thickness of the portion of the index card located at the opening.

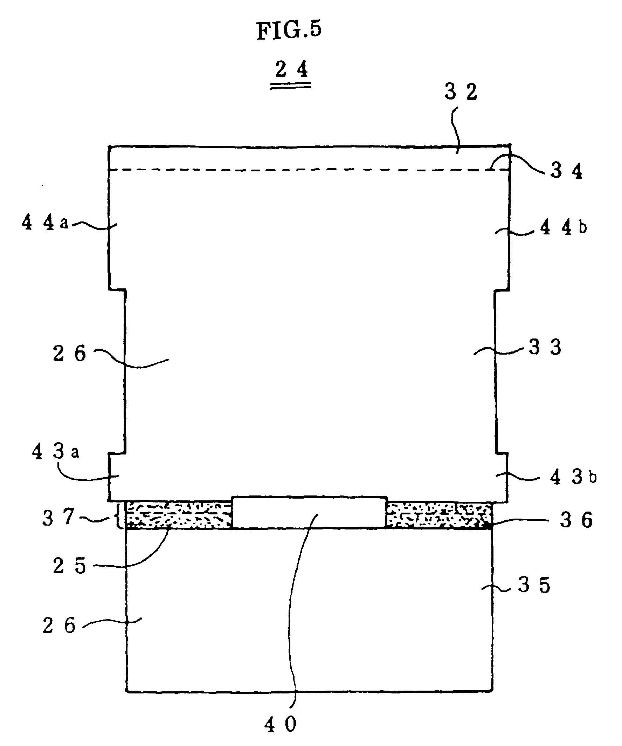

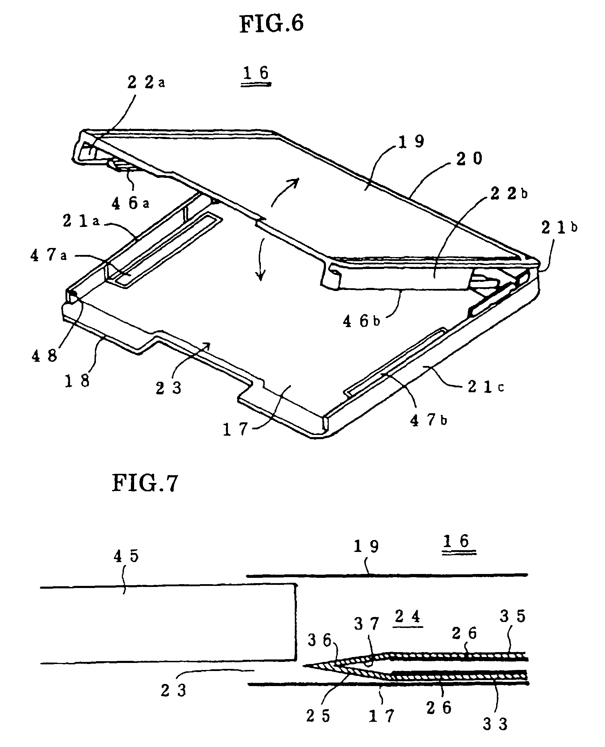

The label-integrated index card in this embodiment will be described with reference to Figs. 5 and 7.

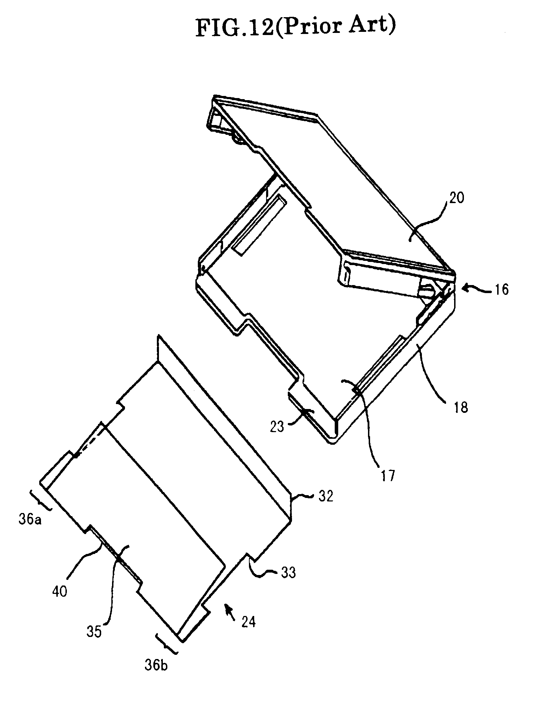

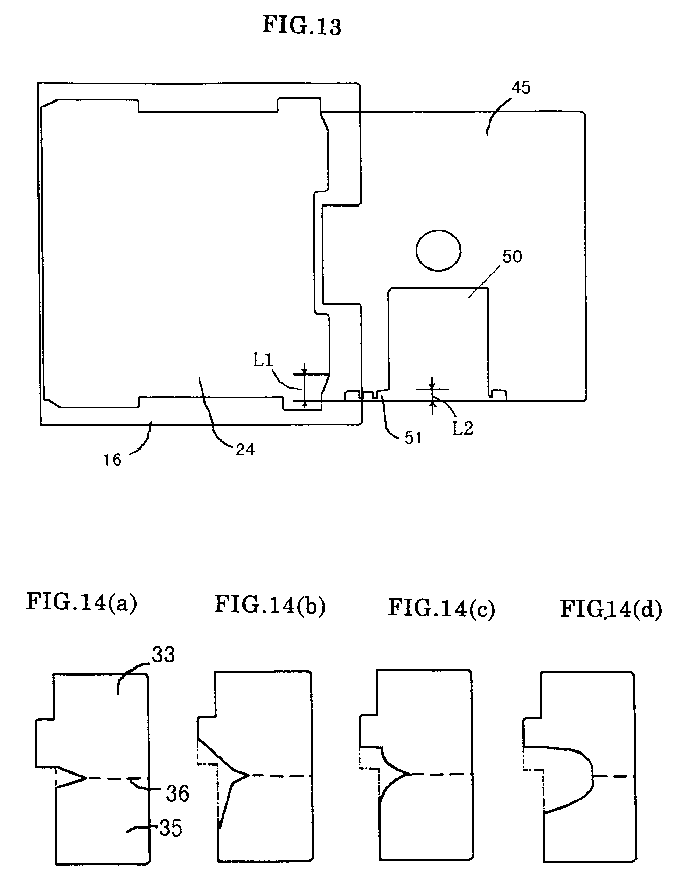

The present invention also solves the problems that arise in the case of the conventional label-integrated index card, such as the card 24 shown in Fig. 12 (wherein the adjacent areas, on the label side, to the bend line between the main portion and the fold-back portion are not removed). Specifically stated, when the MD cartridge 45 is inserted into the container case 16 from the opening 23, the front edge of the shutter 50 of the MD cartridge 45 collides with the terminal portion of the bend line 36 of the label-integrated index card, leading to difficulties in the insertion of the MD cartridge. Moreover, when the cartridge is further forced into the case, the label-integrated index card will be bend, and in the case of the insertion using an automatic device, the terminal portion of the bend line of the label-integrated index card is often squashed and compressed into the case. In other words, when the label-integrated index card 24 is contained in the container case 16 (see Fig. 12), the cover 20 is closed and the MD cartridge 45 is inserted into the case, the front edge of the sleeve guide 51 of the shutter 50 (which is assembled into the MD cartridge 45 so that it holds the edge portion of the cartridge with a cornered U-shape cross-section and that it slides freely along the edge of the cartridge; see Fig. 13) collides with the terminal portion 36a or 36b of the bend line 36. The reason is believed to be that the edge of the terminal portion 36a or 36b is not held by the case and the adjacent portions cannot suppress the restoring force of the terminal portion, resulting in difficulties in maintaining fold position, and that there are deviations in product precision of the sleeve guide 51.

Accordingly, the present invention provides the label-integrated index card which solves the above-mentioned problems and which facilitates insertion of the MD cartridge.

In another embodiment of the present invention, it is provided a label-integrated index card contained in an open-close type hexahedron container case comprising a main body having a bottom wall and a cover having a top wall, the front surface of which case has an opening for cartridge insertion. The label-integrated index card is composed of an index card having one surface processed with release treatment and a label having one surface processed with adhesive treatment and attached to the release surface of the index card. The label-integrated index card comprises: a rear portion abutting the rear wall of the case, a main portion connecting to the rear portion via a bend line, and a fold-back portion connecting to the main portion via a bend line and is characterized in that cutoff edges, preferably oblique cutoff edges (relative to the bend line), are provided at both ends of the bend line between the main portion and the fold-back portion.

There is no limitation with respect to the cutoff edges, as long as they exist at both ends of the bend line when the fold-back portion is in fold position. Each of the cutoff edges is preferably in a shape of a straight line, a curved line or a combination of those, which begins from somewhere towards the middle of the bend line and extends towards the lateral edge of the main portion or the fold-back portion.

Preferably, in this embodiment, too, the areas, on the side of the label, adjacent to the bend line between the main portion and the fold-back portion be removed with the width of approximately 2 - 20 mm.

The label-integrated index card in this embodiment will be explained with reference to Figs. 1 - 4, 13 and 14.

Fig. 1 shows an expanded plan view of the label-integrated index card as viewed from the index side according to the present invention.

Fig. 2 shows an expanded plan view of the label-integrated index card as viewed from the label side according to the present invention.

Fig. 3 shows a partial side view from the line III - III in Fig. 2.

Fig. 4 shows a perspective view of the label-integrated index card of the present invention that has been folded in a determined shape and is to be contained in a MD cartridge container case.

Fig. 5 shows an expanded plan view of the label-integrated index card from the label side according to another Example of the present invention.

Fig. 6 shows a perspective view of the MD cartridge container case in open position.

Fig. 7 shows a cross-sectional view near the opening of the MD cartridge container case in which the label-integrated index card of the present invention is contained and into which the MD cartridge is to be inserted.

Fig. 8 shows a perspective view of the conventional packing of the MD cartridge container case wherein the label and the index card are not integrated.

Fig. 9 shows a perspective view of the MD cartridge container case in which the conventional label-integrated index card is contained and into which the MD cartridge is to be inserted from the opening.

Fig. 10 shows an expansion plan of the conventional label-integrated index card, showing a schematic construction.

Fig. 11 shows a cross-sectional view near the opening of the MD cartridge container case in which the conventional label-integrated index card is contained and into which the MD cartridge is to be inserted.

Fig. 12 shows a perspective view that explains the problems of the conventional label-integrated index card.

Fig. 13 depicts the label-integrated index card of the present invention in use.

Fig. 14 shows various embodiments of the cutoff edge (rim) of the label-integrated index card of the present invention.

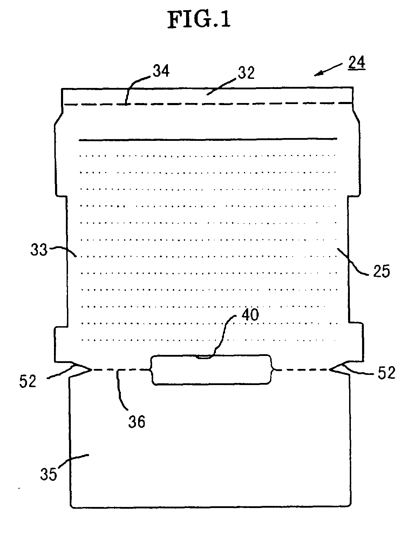

The first embodiment of the present invention will be explained in detail with reference to Figs. 1- 4, 6, 13 and 14 attached hereto.

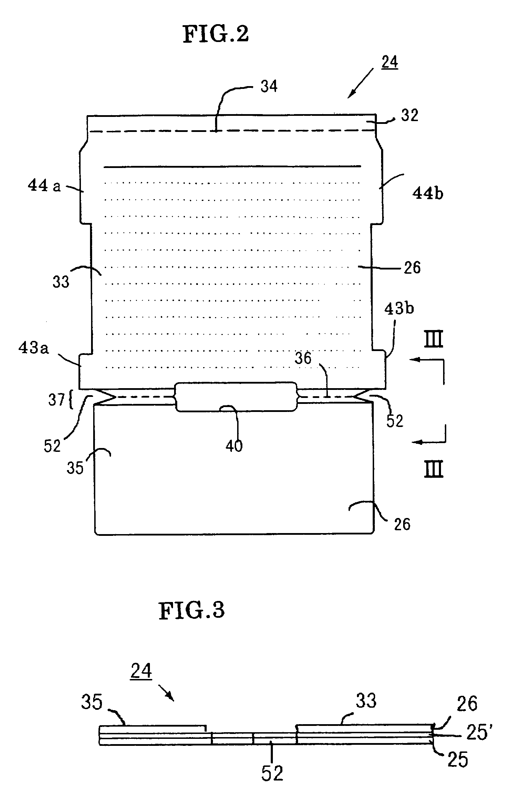

Fig. 1 shows an expanded plan view of the label-integrated index card for the MD cartridge container case from the index side according to the present invention. Fig. 2 shows an expanded plan view of the label-integrated index card from the label side. Fig. 3 shows a magnified side view from the line III - III in Fig. 2.

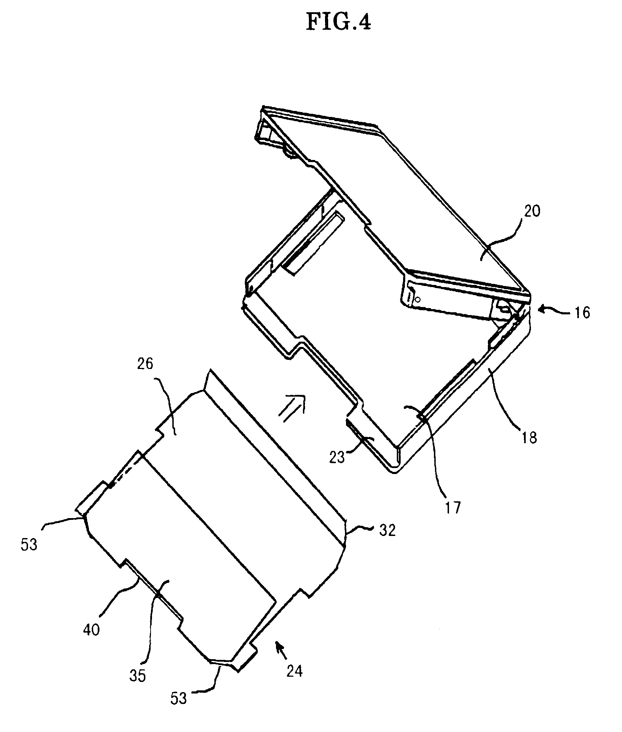

The following explanation will be made with reference to Figs. 1 - 3. The label-integrated index card 24 of the present invention comprises: a rear portion 32 abutting the rear wall of the container case; a main portion 33 connecting to the rear portion 32 via a bend line 34; and a fold-back portion 35 connecting to the main portion 33 via a bend line 36, wherein one surface of the label 26, that has been processed with adhesive treatment, is attached to the surface having a release layer 25' of an index card 25. In addition, the label of the label-integrated index card 24 is partly removed in the areas 37 adjacent to the bend line 36 between the main portion 33 and the fold-back portion 35 by a width of approximately 2 - 20 mm, thereby reducing the thickness of the portion adjacent to the bend line when folded. The number 40 indicates a finger notch hole. When the index card is folded at the bend line 36, the notch hole provides a notch to be aligned with the notch of the case (see Fig. 4), thereby providing a finger notch for the MD cartridge.

At the terminals of the adjacent areas 37 to the bend line 36, where the label 26 does not overlap, cutoffs 52, 52 are provided. When the index card is folded at the bend line 36, cutoff edges 53, 53 are formed at both ends of the bend line 36. The shape of the cutoff edge can be selected as desired, but preferably is oblique-wise relative to the bend line as shown in Fig. 14. For example, the edge line starting from a point on the bend line 36 to the lateral side of the card may be: a straight line as in (a); a straight line followed by a curve as in (b); a curve as in (c); and a curve followed by a straight line. They can be selected as desired.

It was found that, as long as the cutoff edges 53, 53 are formed, the MD cartridge 45 does not collide with the front edge of the label-integrated index card, even if the label 26 overlaps the index card up to the cutoff edges (i.e. regardless of the thickness). However, it is more preferred to reduce the thickness of the above-mentioned area, and the present embodiment provides most preferable means.

Upon the use, the label-integrated index card 24 is contained in the container case 16 so that the card is abutting the bottom wall 17 (see Fig. 4); the cover 20 is closed; and the MD cartridge 45 is inserted into the case from the front opening 23 (see Fig. 7).

Since the cutoff edges 53, 53 at both ends of the adjacent areas to the bend line 36 (formed between the main portion 33 and the fold-back portion 35 of the label-integrated index card 24) are provided, upon the insertion, the front edge of the cartridge 45 passes above the bend line 36 which is thin enough to allow the cartridge to pass, and the cartridge 45 proceeds along the cutoff edges 53, 53, while pressing down the fold-back portion 35 of the label-integrated index card 24. Even when the lateral sides of the label-integrated index card 24 are lifted, they are pressed down before the front edge of the sleeve guide 51 of the slide enters the case, and in addition, there is no bend line in these areas, thus the entire thickness of the card is maintained small. As a result, the insertion of the cartridge 45 into the container case is facilitated. Accordingly, as shown in Fig. 13, by making the width of the cutoff edge 53 larger than that of the sleeve guide 51 of the shutter 50 of the cartridge 45, the collision can be prevented.

Moreover, the areas 37, on the side of the label, adjacent to the bend line 36 between the main portion 33 and the fold-back portion 35 of the label-integrated index card 24 is removed with the width of 5 mm, and therefore the thickness of the part of the label-integrated index card 24 located at the opening 23 is kept small, thereby further facilitating the smooth insertion of the MD cartridge 45.

Fig. 6 shows the above-explained label-integrated index card and the container case in which the index card is to be contained together with a MD cartridge. The container case is the same as shown in Fig. 6.

In Figs. 4 and 6, the container case 16 for MD cartridge is an open-close type hexahedron container with thin walls made of transparent plastic, which comprises a main body 18 having a large square bottom wall 17; and a cover 20 having a large top wall 19, which is pivotably supported by the main body 18. The main body 18 has three upward vertical walls 21 (21a, 21b and 21c) that locate on the three edges (edges of the bottom wall 17 except the front edge) and connect to each other, and the cover 20 has two downward vertical walls 22 (22a and 22b) which locate on the lateral edges (the left edge and the right edge of the top wall 19). Pins (not shown) are provided on the rearward portion of the lateral sides of the cover 20, and bearings mating with those pins are provided at the lateral terminals of the rear upward vertical wall 21b.

The cover 20 of the container case 16 can be freely pivoted in the direction of the arrows shown in Fig. 6, and the main body and the cover 20 can take open or close position. When they are in dose position, the five walls 17, 19 and 21a-21c form a case 16, having no wall at front (which functions as a opening 23 for the MD cartridge insertion). The left and right upward vertical walls 21 (21a and 21c) become the left and right lateral walls of the container case 16, respectively, and the rear upward vertical wall 21b becomes a rear wall of the case 16.

In such an MD cartridge container case 16, the label-integrated index card 24 is contained. The label-integrated index card 24 to be contained should have the shape and the size being fitted to the inner space of the container case 16 when closed. Such an index card 24 can be prepared as follows: the index card (itself) 25 and the label 26 are made of general high quality sheets or the like, and one surface of the index card 25 is processed with release treatment, for example, silicone is applied, thereby forming a release layer, while one surface of the label 26 is processed with adhesive treatment, for example, adhesive is applied, thereby forming an adhesive layer. The release surface of the index card 25 and the adhesive surface of the label 26 are attached together, thereby obtaining a whole sheet 27 for the label-integrated index card 24. The thickness of the whole sheet 27 is approximately 220 µm.

The whole sheet 27 is subjected to printing and cutting processes in rotary letterpress printing method. For example, three label-integrated index cards 24 are obtained by printing and cutting in the three-row processing. In the printing process, rulings, lines or the like for index or title of the recording contents are printed. The whole sheet on which rulings or the like have been printed is led to the cutting process. The cutting process includes half-cutting process; take-up process (of unnecessary portion of the label); and full-cutting process. In the half-cutting process, the bend line 34 between the rear portion 32 and the main portion 33 of the label-integrated index card 24, and the bend line 36 between the main portion 33 and the fold-back portion 35 are provided with perforation as bend means; and the adjacent areas 37, on the side of the label, to the bend line 36 is processed with the width of, for example, 5 mm, so that the area can be removed.

In full-cutting process, the contour of the label-integrated index card 24 is cut out and the center portion of the adjacent areas to the bend line 36 is cut out to form a rectangular hole 40 which is to be aligned with a finger notch of the container case 16, thereby obtaining a label-integrated index card 24.

When such a label-integrated index card 24 is contained in the case 16, the fold-back portion 35 is folded at the bend line 36 to overlap with the main portion 33, so that the label side comes inside. Alternatively, the fold-back portion 35 may be folded to overlap with the main portion 33, so that the label side comes outside. The rear portion 32 is bend at the bend line 34 and erected perpendicular to the main portion 33. Then, the cover 20 is opened widely relative to the main body 18, and the folded label-integrated index card 24 is contained, so that the main portion 33 is mounted on the determined position of the bottom wall 17. Upon mounting, the rear portion 32 of the label-integrated index card 24 is abutting the rear wall 21b of the container case 16, and the bend line 36 of the fold-back portion 35 (which has been folded to the cover side) is located at the opening 23 for the MD cartridge insertion.

When the cover 20 is closed, the lateral downward vertical walls 22 push down the extensions 43 (43a and 43b) and 44 (44a and 44b) locating at front and rear portions of the lateral sides of the main portion 33 of the label-integrated index card 24, so that the each extension is pressed to the bottom wall 17 and the label-integrated index card 24 is pinched and held between the main body 18 and the cover 20. Alternatively, the fold-back portion 35 may be folded to the side of the main body.

After the label-integrated index card 24 is placed in the container case 16 in this manner, the cover 20 is closed and the MD cartridge 45 is inserted into the container case 16 from the front opening 23. Since both ends of the bend line 36 between the main portion 33 and the fold-back portion 35 of the label-integrated index card 24 have the cutoff edges 53, 53, and the width of the lacking portion along the bend line is larger than the width of the front edge of the sleeve guide, smooth insertion of the MD cartridge into the container case is facilitated. In addition, since the adjacent areas 37, on the side of the label, are removed with the width of 5 mm, the thickness of the portion of the label-integrated index card 24 located at the opening 23 is small, thus the smooth insertion of the MD cartridge 45 is further facilitated. After the insertion, in the case of single-item wrapping, single case 16 in which the label-integrated index card 24 and the MD cartridge 45 is contained is wrapped with a film, and in the case of packed set, 3 - 5 cases 16 are directly wrapped together with a film. In the latter case, there is no need to wrap twice, resulting in easier wrapping process and smaller amount of wrapping film, as compared with the conventional packed set.

Upon its use, the wrapping film is removed, but the label-integrated index card 24 may not be lost without opening the cover 20, since the card is contained in the case 16. In order to take out the index card 24, the cover 20 is opened. When the cover is opened, the MD cartridge 45 is also moved with the cover 20, since the cartridge is held by the support extrusions 46 (46a and 46b) of the cover 20, each of which locates at middle portion of the lower edge of the downward vertical wall 22 of the cover 20, and therefore, the cartridge does not hinder the removal of the index card 24. The number 47 (47a and 47b) indicates a recessive portion formed at middle of lateral edge portion of lower wall 17, which accommodates corresponding support extrusion 46. The number 48 represents a pin locating at the front portion of the inside of the lateral wall 21a and 21c, and holds the cover 20 when the cover is closed.

The label-integrated index card 24 taken out is extended, and the index card 25 and the label 26 are filled in. The part of the label 26 on which words are written, is peel off and attached to the outer surface of the container case 16. The rest of the label-integrated index card 24 is folded again and returned into the case 16. The index card 25 functions as a mount for the label 26. The cover 20 is then closed and the case is ready for the insertion/removal of the MD cartridge 45 from the front opening 23. Upon insertion from the opening, since the thickness of the portion of the label-integrated index card 24 located at the front opening 23 is small, and the portion has oblique cutoff edges 53, 53 (relative to the bend line) at both ends, smooth insertion of the MD cartridge 45 into the case is facilitated.

In the above-mentioned embodiment, the adjacent areas 37, on the side of the label, to the bend line 36 between the main portion 33 and the fold-back portion 35 of the label-integrated index card 24, is removed with the width of 5 mm, but the width may be changed in the range of 2 - 20 mm. When the width is below 2 mm, the thickness of the part of the label-integrated index card 24 located at the opening 23 is not small, thus the insertion of the MD cartridge 45 is not smooth. When the width is above 20 mm, the area of the label 26 becomes small and there should be extra bend lines, leading to hindrance in the smooth insertion of the MD cartridge 45.

According to the above embodiment, since there are cutoff edges at both ends of the bend line between the main portion and the fold-back portion of the label-integrated index card, the cartridge can be smoothly inserted into the container case. In addition, the area of the label side is removed and the thickness of the adjacent portion to the bend line, which is to be located at the opening of the cartridge, is reduced, which further facilitates smooth insertion of the cartridge into the container case.

Another embodiment of the present invention will be explained in detail with reference to Figs. 5 - 7. Fig. 5 shows an expansion plan of the label-integrated index card from the label side according to this embodiment. Fig. 6 shows a schematic view of the MD cartridge container case in open position. Details of Fig. 6 is explained above. Fig. 7 shows a cross-sectional view near the opening of the MD cartridge container case in which the label-integrated index card of the present invention is contained and into which the MD cartridge is to be inserted.

The label-integrated index card 24 comprises: a rear portion 32 abutting the rear wall of the container case; a main portion 33 connecting to the rear portion 32 via a bend line 34; and a fold-back portion 35 connecting to the main portion 33 via a bend line 36. In addition, with respect to the label side of the label-integrated index card 24, the adjacent areas 37 to the bend line 36 between the main portion 33 and the fold-back portion 35 are removed, with the width of approximately 2 - 20 mm, for example 5mm, thereby reducing the thickness of the adjacent portion to the bend line when folded. The number 40 indicates a finger notch hole. When the index card is folded at the bend line 36, the hole provides a notch to be aligned with the notch of the case (see Fig. 4), thereby providing a notch for the MD cartridge.

When such a label-integrated index card 24 is contained in the case 16, the fold-back portion 35 is folded at the bend line 36 to overlap with the main portion 33, so that the label side comes inside. Alternatively, the fold-back portion 35 may be folded to overlap with the main portion 33, so that the label side comes outside. The rear portion 32 is bend at the bend line 34 and erected perpendicular to the main portion 33. Then, the cover 20 is opened widely relative to the main body 18, and the folded label-integrated index card 24 is contained, so that the main portion 33 is mounted on the determined position of the bottom wall 17. Upon mounting, the rear portion 32 of the label-integrated index card 24 is abutting the rear wall 21b of the container case 16, and the bend line 36 of the fold-back portion 35 (which has been folded to the cover side) is located at the opening 23 for the MD cartridge insertion.

When the cover 20 is closed, the lateral downward vertical walls 22 push down the extensions 43 (43a and 43b) and 44 (44a and 44b) locating at front and rear portions of the lateral sides of the main portion 33 of the label-integrated index card 24, so that the each extension is pressed to the bottom wall 17 and the label-integrated index card 24 is pinched and held between the main body 18 and the cover 20. Alternatively, the fold-back portion 35 may be folded to the side of the main body.

After the label-integrated index card 24 is placed in the container case 16 in this manner, the cover 20 is closed and the MD cartridge 45 is inserted into the container case 16 from the front opening 23 (see Fig. 7). Since the adjacent areas 37, on the side of the label, to the bend line 36 between the main portion 33 and the fold-back portion 35 of the label-integrated index card 24 are removed with the width of 5 mm, the thickness of the portion of the label-integrated index card 24 located at the opening 23 is small, thus the relatively smooth insertion of the MD cartridge 45 is facilitated. After the insertion, in the case of single-item wrapping, single case 16 in which the label-integrated index card 24 and the MD cartridge 45 is contained is wrapped with a film, and in the case of packed set, 3 - 5 cases 16 are directly wrapped together with a film. In the latter case, there is no need to wrap twice, resulting in easier wrapping process and smaller amount of wrapping film, as compared with the conventional packed set.

According to the present invention as explained above, the loss of the label-integrated index card after the removal of the wrapping film can be prevented by containing the card in an open-close type container case having a front opening for the cartridge insertion. In addition, in accordance with the necessity, the label-integrated index card is taken out from the case, the label is peeled from the label-integrated index card, and the rest of the card is returned into the case, i.e. the index card and the label can be utilized whenever they are needed.

Further, since the index card itself functions as a release mount, there is no need to prepare an individual release mount. In addition, when the cases are packed in a set, there is no need to pack cases individually before making a set. As a result, the amount of trash can be reduced and effect on the environment can be reduced. In the case of the packed set, the process for wrapping individual case can be omitted.

Moreover, since the adjacent areas, on the side of the label, to the bend line between the main portion and the fold-back portion of the label-integrated index card are removed, the thickness of the portion of the label-integrated index card to be located at the front opening of the case is maintained small. Therefore, smooth insertion of the cartridge into the container case is facilitated.

By limiting the width of the removal area (on the label side) to 20 mm, the relatively large label area is retained, while the thickness of the portion of the label-integrated index card to be located at the front opening of the case is maintained small, thereby facilitating the smooth insertion of the cartridge into the container case.

## Claims

1. A label-integrated index card contained in an open-close type hexahedron container case comprising a main body having a bottom wall and a cover having a top wall, a front surface of said case having an opening for insertion of a cartridge, said label-integrated index being composed of an index card having one surface processed with release treatment and a label having one surface processed with adhesive treatment and said label being attached to the index card at said one surfaces of said label and the index card, said label-integrated index card including a rear portion abutting a rear wall of the case, a main portion connecting to the rear portion via a bend line, and a fold-back portion connecting to the main portion via a bend line, characterized in that cutoff edges are provided at both ends of the bend line between the main portion and the fold-back portion.

2. The label-integrated index card according to Claim 1, wherein at least a part of said cutoff edges includes oblique cutoff edge relative to the bend line.

3. The label-integrated index card according to Claim 1 or 2, characterized in that at least a part of said cutoff edge includes a straight line and/or a curve.

4. A label-integrated index card contained in an open-close type hexahedron container case comprising a main body having a bottom wall and a cover having a top wall, a front surface of said container case having an opening for cartridge insertion, said label-integrated index being composed of an index card having one surface processed with release treatment and a label having one surface processed with adhesive treatment and said label being attached to the index card at said one surfaces of said label and the index card, and said label-integrated index card including a rear portion abutting a rear wall of the case, a main portion connecting to the rear portion via a bend line, and a fold-back portion connecting to the main portion via a bend line, characterized in that areas on the side of the label adjacent to the bend line between the main portion and the fold-back portion is removed.

5. The label-integrated index card according to Claim 4, characterized in that the width of removal, on the side of the label, is 2 - 20 mm.

6. The label-integrated index card according to Claim 4, characterized in that cutoff edges are provided at both ends of the bend line between the main portion and the fold-back portion.

7. The label-integrated index card according to Claim 6, characterized in that at least a part of said cutoff edge includes oblique cutoff edge relative to the bend line.

8. The label-integrated index card according to Claim 6, characterized in that at least a part of said cutoff edge includes a straight line and/or a curve.
